# DEMANDE DE BREVET EUROPEEN

(11) **EP 0 752 201 A1**
(43) Date de publication de la demande: **08.01.1997**
(21) Numéro de dépôt: 96401411.2
(22) Date de dépôt: 26.06.1996
(51) Int. Cl.: A01B 21/08

(54) **Pulvériseur à disques en X transformable en pulvériseur à disques en V, et vice-versa**

(30) Priorité: 26.06.1995 FR 9507658
(71) Demandeur: Robin, Pierre-Henri, 37340 Saint Symphorien les Ponceaux (FR)
(72) Inventeur: Robin, Pierre-Henri, 37340 Saint Symphorien les Ponceaux (FR)
(74) Mandataire: Lemoine, Robert

(57) **Abrégé**

Le pulvériseur à disques selon l'invention comprend un châssis (1) pourvu de paliers verticaux au niveau desquels sont articulés quatre sous-châssis portant chacun une batterie de disques disposée obliquement par rapport au sens d'avancement (A), et est caractérisé en ce que deux des quatre sous-châssis (10C,10D ; 10E,10F) sont remplaçables par deux sous-châssis de rechange (10E,10F ; 10C,10D) portant chacun une batterie de disques appropriée (9E,9F ; 9C,9D), afin que le pulvériseur, dont les batteries de disques seraient disposées en V, puisse être transformé à volonté en un pulvériseur à batteries de disques en X, et vice-versa.

## Description

La présente invention concerne un pulvériseur à disques pour le travail du sol, comprenant un châssis, quatre sous-châssis portant chacun une batterie de disques, les sous-châssis étant articulés sur le châssis, au niveau de paliers verticaux, et des moyens pour verrouiller les sous-châssis dans des positions angulaires dans lesquelles les batteries de disques sont disposées obliquement par rapport au sens d'avancement et forment un V ou un X.

Les pulvériseurs à disques sont classés d'après la position relative de leurs batteries de disques. C'est ainsi qu'ils sont dits en V lorsque leurs batteries de disques forment un V et en X lorsque celles-ci forment un X.

Les pulvériseurs des deux types travaillent de manière légèrement différentes selon la nature du sol de sorte qu'un pulvériseur d'un type prédéterminé peut parfaitement convenir pour exécuter certains travaux et être moins performant lors de la réalisation d'autres travaux.

Les agriculteurs devraient donc posséder un pulvériseur de chaque type afin de pouvoir travailler les parcelles de terre avec l'instrument qui est le mieux approprié. Cependant, compte tenu des prix pratiqués actuellement, ils sont généralement amenés à se conenter de l'achat d'un pulvériseur d'un seul type.

Il est vrai que FR-A-1 249 565 décrit un pulvériseur dont les batteries de disques peuvent être disposées en V ou en X. Cependant, ce pulvériseur ne permet pas de travailler correctement la partie du sol située au voisinage de son axe longitudinal.

La présente invention se propose de remédier à cet inconvénient et, pour ce faire, elle a pour objet un pulvériseur à disques ayant la structure indiquée ci-dessus et qui se caractérise en ce que deux des quatre sous-châssis sont remplaçables par deux sous-châssis de rechange portant chacun une batterie de disques appropriée , le pulvériseur pouvant ainsi être transformé à volonté en un pulvériseur en V ou en un pulvérisateur en X.

Lorsque le châssis possède un premier et un second côtés longitudinaux parallèles, un premier palier antérieur et un premier palier postérieur sont de préférence prévus respectivement au voisinage des extrémités antérieure et postérieure du premier côté longitudinal tandis qu'un deuxième palier antérieur, un deuxième palier postérieur et un troisième palier postérieur sont de préférence prévus respectivement en arrière de l'extrémité antérieure, au voisinage de l'extrémité postérieure, et en avant de l'extrémité postérieure du second côté longitudinal, les sous-châssis de rechange pouvant être articulés sur le châssis au niveau du deuxième palier antérieur et du deuxième palier postérieur ou au niveau du deuxième palier antérieur et du troisième palier postérieur.

Selon un mode de réalisation particulier, les batteries de disques sont disposées en X lorsque les sous-châssis sont articulés au niveau des premier et deuxième paliers antérieurs et des premier et deuxième paliers postérieurs, et en V lorsque les sous-châssis sont articulés au niveau des premier et deuxième paliers antérieurs et des premier et troisième paliers postérieurs.

Les moyens prévus pour verrouiller les sous-châssis dans plusieurs positions angulaires différentes permettent de régler à volonté la position angulaire des batteries de disques par rapport au sens d'avancement et d'intervenir par conséquent sur la qualité du travail des disques.

Selon l'invention, ils comprennent de préférence cinq séries de perçages réalisées dans le châssis suivant des arcs de cercle centrés sur les paliers, au moins un perçage réalisé dans chaque sous-châssis, en face de la série de perçages correspondante, et une broche insérable dans le perçage de chaque sous-châssis ainsi que dans l'un des perçages de la série correspondante.

Une autre caractéristique du pulvériseur conforme à l'invention réside dans la disposition selon laquelle la flèche d'attelage est disposée suivant l'axe longitudinal du châssis lorsque les batteries de disques forment un X et est inclinée par rapport à cet axe lorsque les batteries de disques forment un V, l'inclinaison étant telle que l'extrémité libre de la flèche d'attelage et la pointe du V sont situées de part et d'autre de l'axe longitudinal du châssis.

Deux modes d'exécution de la présente invention seront décrits ci-après à titre d'exemples nullement limitatifs référence aux dessins annexés dans lesquels :
- la figure 1 est une vue de dessus schématique d'un pulvériseur à disques conforme à l'invention, dont les batteries de disques sont disposées en X ;
- la figure 2 est une vue selon la ligne II-II de la figure ; et
- la figure 3 est une vue analogue à la figure 1 mais montrant un pulvériseur à disques conforme à l'invention, dont les batteries de disques sont disposées en V.

Les pulvériseurs à disques que l'on peut voir sur les dessins comprennent un châssis 1 possédant deux côtés longitudinaux 2,3 s'étendant parallèlement au sens d'avancement A et deux côtés transversaux 4,5 perpendiculaires aux côtés longitudinaux, le côté transversal 4 étant situé à l'avant et portant un support amovible 6 pourvu d'une flèche d'attelage 7.

Le châssis 1 est pourvu de cinq paliers verticaux, à savoir un premier palier antérieur 8A et un premier palier postérieur 8B situés respectivement au voisinage des extrémités antérieure et postérieure du premier côté longitudinal 2, un deuxième palier antérieur 8C en arrière de l'extrémité antérieure du second côté longitudinal 3, un deuxième palier postérieur 8D au voisinage de l'extrémité postérieure dudit second côté longitudinal 3, et un troisième palier postérieur 8E en avant du deuxième palier postérieur 8D.

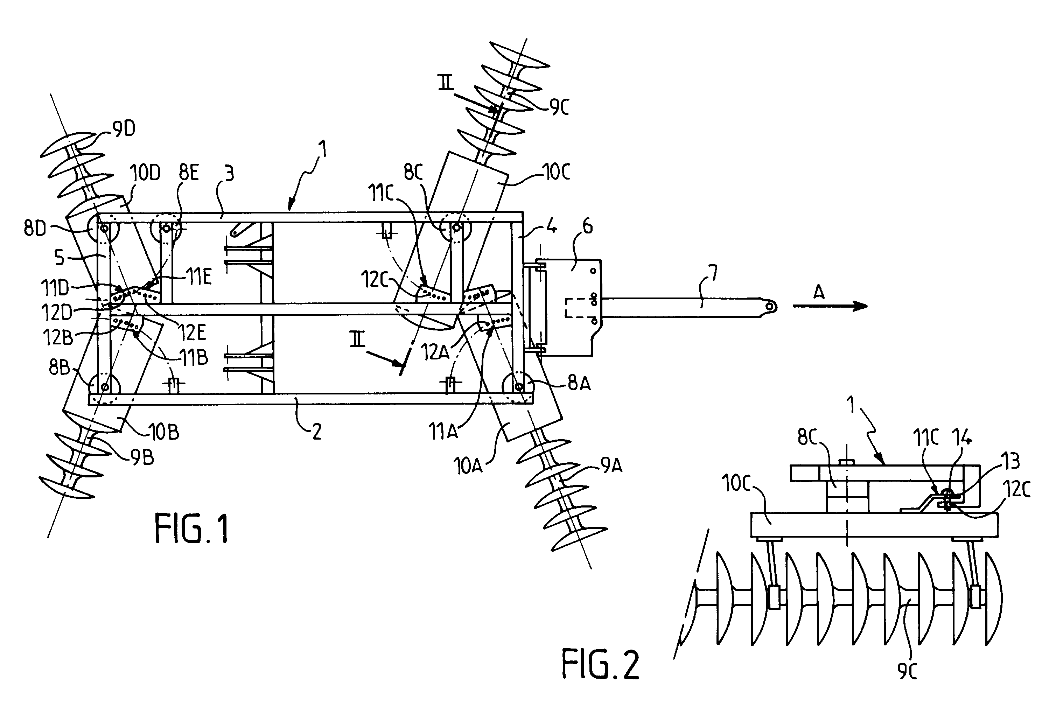

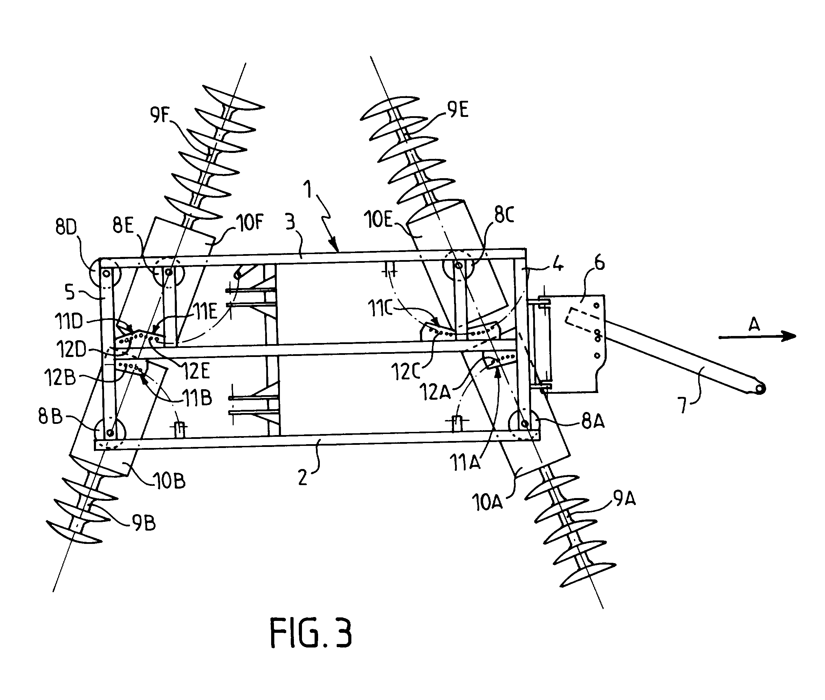

Le pulvériseur représenté sur la figure 1 comporte quatre batteries de disques 9A, 9B, 9C et 9D disposées en X tandis que le pulvériseur représenté sur la figure 3 comporte quatre batteries de disques 9A, 9B, 9E et 9F disposées en V ;

Dans le type en X représenté sur la figure 1, les batteries de disques sont portées par quatre sous-châssis 10A, 10B, 10C et 10D articulés sur le châssis 1, respectivement par l'intermédiaire des paliers 8A, 8B, 8C et 8D.

Par contre, dans le type en V représenté sur la figure 3, les batteries de disques sont portées par quatre sous-châssis 10A, 10B, 10E et 10F articulés sur le châssis 1 par l'intermédiaire des paliers 8A, 8B, 8C et 8E.

Lorsque l'on transforme un pulvériseur en X en un pulvériseur en V, on conserve donc les batteries de disques 9A et 9B ainsi que les sous-châssis 10A et 10B, lesquels restent articulés au niveau des paliers 8A et 8B. Par contre, on remplace les batteries de disques 9C et 9D par les batteries de disques 9E et 9F et les sous-châssis 10C et 10D par les sous-châssis 10E et 10F, ces derniers étant montés au niveau des paliers 8C et 8E.

Pour transformer un pulvériseur en V en un pulvériseur en X, il convient bien entendu de remplacer les batteries de disques 9E et 9F par les batteries de disques 9C et 9D et les sous-châssis 10E et 10F par les sous-châssis 10C et 10D, ces derniers étant montés au niveau des paliers 8C et 8D.

Lorsque le pulvériseur est en X, comme représenté sur la figure 1, les extrémités internes des batteries de disques 9A et 9C s'avancent légèrement au-delà de l'axe longitudinal du châssis 1, ce qui évite qu'une bande de terrain située au voisinage de cet axe ne soit pas travaillée.

Par ailleurs, la concavité des disques des batteries 9A et 9C est dirigée vers l'extérieur alors que celle des disques des batteries 9B et 9D est dirigée vers l'intérieur, cette disposition étant prévue pour ramener vers l'intérieur la terre déplacée vers l'extérieur par les disques des batteries 9A et 9C.

En outre, la flèche d'attelage 7 s'étend coaxialement avec l'axe longitudinal du châssis 1.

Lorsque le pulvériseur est en V, comme représenté sur la figure 3, la concavité des disques des batteries 9A et 9E est dirigée dans un sens alors que celle des disques des batteries 9B et 9F est dirigée dans l'autre sens, ce qui permet de ramener vers sa position d'origine la terre déplacée latéralement par les disques des batteries 9A et 9E.

Par ailleurs, la flèche 7 est inclinée par rapport à l'axe longitudinal du châssis 1, son extrémité libre étant située du côté de cet axe qui ne comporte pas la pointe du V ménagé par les batteries de disques.

On précisera ici que l'autre extrémité de la flèche F n'est pas située sur l'axe longitudinal du châssis, mais du côté de cet axe qui comporte la pointe du V.

On précisera également que la position angulaire de la flèche 7 par rapport au support 6 peut être réglée d'une manière connue en soi et l'on s'abstiendra de décrire les moyens permettant ce réglage.

Les pulvériseurs représentés sur les figures 1 et 3 comportent par ailleurs des moyens de verrouillage 11A, 11B, 11c, 11D et 11E permettant d'immobiliser les sous-châssis dans des positions angulaires prédéterminées.

Dans les deux pulvériseurs représentés, les moyens de verrouillage comprennent cinq séries de perçages 12A, 12B, 12C, 12D et 12E réalisées dans le châssis 1 suivant des arcs de cercle centrés respectivement sur les paliers 8A, 8B, 8C, 8D et 8E, au moins un perçage 13 réalisé dans chaque sous-châssis, en face de la série de perçages correspondante, et une broche 14 insérable dans le perçage 13 de chaque sous-châssis ainsi que dans l'un des perçages de la série correspondante.

On notera ici que seuls le perçage 13 du sous-châssis 10C et la broche 4 correspondante ont été représentés sur la figure 2.

Il ressort de ce qui précède que grâce à la présente invention, un pulvériseur d'un type donné peut être transformé en un pulvériseur de l'autre type, moyennant un faible investissement et sans difficultés particulières.

## Revendications

1. Pulvériseur à disques pour le travail du sol, comprenant un châssis (1), quatre sous-châssis portant chacun une batterie de disques, les sous-châssis étant articulés sur le châssis, au niveau de paliers verticaux, et des moyens pour verrouiller les sous-châssis dans des positions angulaires dans lesquelles les batteries de disques sont disposées obliquement par rapport au sens d'avancement (A) et forment un V ou un X, caractérisé en ce que deux des quatre sous-châssis (10C,10D ; 10E,10F) sont remplaçables par deux sous-châssis de rechange (10E, 10F ; 10C,10D) portant chacun une batterie de disques appropriée (9E,9F ; 9C,9D), le pulvériseur pouvant ainsi être transformé à volonté en un pulvériseur en V ou en un pulvérisateur en X.

2. Pulvériseur selon la revendication 1, caractérisé en ce que lorsque le châssis (1) possède un premier et un second côtés longitudinaux (2,3) parallèles, un premier palier antérieur (8A) et un premier palier postérieur (8B) sont prévus respectivement au voisinage des extrémités antérieure et postérieure du premier côté longitudinal (2) tandis qu'un deuxième palier antérieur (8C), un deuxième palier postérieur (8D) et un troisième palier postérieur (8E) sont prévus respectivement en arrière de l'extrémité antérieure, au voisinage de l'extrémité postérieure, et en avant de l'extrémité postérieure du second côté longitudinal (3), les sous-châssis de rechange (10E, 10F ; 10C,10D) pouvant être articulés sur le châssis au niveau du deuxième palier antérieur (8C) et du deuxième palier postérieur (8D) ou au niveau du deuxième palier antérieur (8C) et du troisième palier postérieur (8E).

3. Pulvériseur selon la revendication 2, caractérisé en ce que les batteries de disques sont disposées en X lorsque les sous-châssis sont articulés au niveau des premier et deuxième paliers antérieurs (8A,8C) et des premier et deuxième paliers postérieurs (8B,8D) et en V lorsque les sous-châssis sont articulés au niveau des premier et deuxième paliers antérieurs (8A,8C) et des premier et troisième paliers postérieurs (8B,8E).

4. Pulvériseur à disques selon l'une quelconque des revendications 1 à 3, caractérisé en ce que les moyens de verrouillage (11A-11E) comprennent cinq séries de perçages (12A-12E) réalisées dans le châssis (1) suivant des arcs de cercle centrés sur les paliers (8A-8E), au moins un perçage (13) réalisé dans chaque sous-châssis, en face de la série de perçages correspondante, et une broche (14) insérable dans le perçage de chaque sous-châssis ainsi que dans l'un des perçages de la série correspondante.

5. Pulvériseur à disques selon l'une quelconque des revendications précédentes, caractérisé en ce qu'il comprend une flèche d'attelage (7) disposée suivant l'axe longitudinal du châssis (1) lorsque les batteries de disques (9A-9D) forment un X et inclinée par rapport à cet axe lorsque les batteries de disques (9A,9B,9E,9F) forment un V, l'inclinaison étant telle que l'extrémité libre de la flèche d'attelage et la pointe du V sont situées de part et d'autre de l'axe longitudinal du châssis (1).
